# EUROPEAN PATENT APPLICATION

(11) **EP 4 527 497 A1**
(43) Date of publication of application: **26.03.2025**
(21) Application number: 23198364.4
(22) Date of filing: 19.09.2023
(51) Int. Cl.: B01J 19/00, C08F 10/06, C08F 2/01

(54) **ENERGY-EFFICIENT POLYPROPYLENE PRODUCTION BY REDUCING POWER CONSUMPTION OF HEAT REJECTION SYSTEM**

(71) Applicant: Lummus Novolen Technology GmbH, 68165 Mannheim (DE)
(72) Inventor: Bangerth, Stefan, Mannheim (DE); Langner, Ralf, Mannheim (DE); Frühbauer, Martin, Mannheim (DE)
(74) Representative: Osha BWB

(57) **Abstract**

Embodiments disclosed herein relate to the production of polypropylene. At least one olefin monomer stream (10, 12) is fed to a polymerization zone (2). A recirculation gas stream (31) is withdrawn therefrom, compressed into a compressor (4), cooled in a first heat exchanger (5), separated in a phase separator (6), flashed in a pressure regulator (7), fed to a second heat exchanger (8), and recycled (83) to the polymerization zone (2).

## Description

### TECHNICAL FIELD

The present disclosure relates to a process and a system for the production of polypropylene, such as, for example, impact copolymers of polypropylene, homopolymers of polypropylene, or random copolymers of polypropylene.

### BACKGROUND ART

Dissipating the heat produced by propylene polymerization processes can prove challenging with respect to power consumption. A "recirculation gas", *i.e.,* a stream of overhead gases containing unreacted monomer, may be withdrawn from a reactor in which polymerization takes place, cooled and then recycled to the reactor, thereby providing cooling the reactor.

In particular, the production of impact copolymers of polypropylene may be more energy-intense than the production of homopolymers of polypropylene, for example because the ethylene content in the reactor recirculation gas lowers the dew point of said recirculation gas, thereby hindering efficient heat rejection.

Several alternatives are known to still provide cooling to the reactor. The recirculation gas may for example be compressed and cooled by routing it over a heat exchanger with cooling water as coolant. However, this scheme requires high flow rates since the recirculation gas will not or only partly condense.

It is also known to condense the recirculation gas against a refrigerant or chilled water. This provides a higher degree of condensation and therefore reduces the flow rate of recirculation gas. However, the operation of a refrigeration system results in additional power consumption.

Between these two approaches, *i.e., i)* higher compression ratio and heat rejection against cooling water, or *ii)* lower compression ratio and heat rejection against refrigerant, those skilled in the art know that a variety of combinations and operating conditions of exist. For example, increasing the discharge pressure from the compressor leads to a higher degree of condensation, while combining cooling against cooling water with condensation against refrigerant will reduce the duty of the refrigeration system.

An example of cooling process of a polypropylene cascade polymerization reactor is described in US 6812301 B2. Unconverted monomers flow into the reactor dome, are then filtered, compressed, cooled or partly liquified with a coolant or a refrigerant, and then predominantly returned to the reactor in two phases via a regulating valve. Only one heat exchanger is used, with heat rejection either to a coolant or a refrigerant. US 6174969 B1 discloses a similar process with two heat exchangers in the cooling loop.

EP 3 868 793 A1 includes the description of another conventional example of gas phase reactor cooling in a cascade reactor. The recirculation gas is pressurized in a compressor, cooled in a heat exchanger and then recirculated to the gas phase reactor.

A multistage process including a gas phase cascade polymerization reactor to produce propylene-ethylene impact copolymers is described in US 4740551 A. The polymerization reactor is a fluidized bed reactor, and a membrane is used for H₂ separation of a recycle gas. Membrane systems, while promising lower energy consumption, are generally more sensitive to harsh operating conditions and are thus largely unproven on an industrial scale.

US 8735513 B2 describes a multistage process including a "Continuous Stirred Tank Reactor"-type (CSTR-type) gas phase cascade polymerization reactor to produce propylene-ethylene impact copolymers. Heat of polymerization in the CSTR is removed by latent heat of vaporization of raw material (liquified propylene), or mainly sensible heat of recirculation gas. The patent describes that in a cascade of horizontal stirred tank reactors, in which the heat of polymerization is removed by vaporization of liquified, unreacted reactor gas, the heat removal and with it the production capacity decrease with increasing ethylene content. In order to sustain high production rates in such a cascade reactor, the patent teaches cooling by sensible heat and using a CSTR-type reactor.

The conventional approach to remove heat of polymerization via the reactor recirculation gas consists in addressing heat transfer, gas composition control and refrigeration tasks in specific and separate equipment. The focus of prior art processes has merely been put on enhancing the capabilities of each dedicated part of the recirculation gas cooling system separately, at the expense of investment and operation costs. Indeed, the operation of current systems may sometimes require the consumption of tremendous amounts of energy.

For example, with respect to gas composition control, in patent US 6812301 B2, a control valve in the recirculation gas line regulates a bleed stream, which is used to control reactor pressure and gas composition. However, the bleed stream is not optimized with respect to its gas composition. In fact, the separation of individual components present in the recirculation gas is conventionally done in equipment remote from the polymer production zone. Similarly, any refrigeration needs are generally served by dedicated refrigeration plants.

Thus, prior art recirculation gas cooling equipment may be large, unsuitable and/or unreliable for industrial production, and may also be expensive and substantially increase the cost of polypropylene.

Accordingly, within the context of processes and systems for the production of polypropylene, there is a need of limiting energy consumption of the recirculation gas cooling without increasing the investment cost of the system, while obtaining a polypropylene polymer of high quality.

A common difficulty in obtaining impact copolymers of polypropylene of high quality is the control of hydrogen content in the cascade reactor used for copolymerization. Hydrogen serves as modular weight regulator in propylene polymerization and copolymerization. Hydrogen present in an upstream reactor will transfer to a downstream reactor during product transfer if no specific precautions are taken, hence affecting control of hydrogen content in the downstream reactor. The beneficial effect of control over hydrogen transfer during the production of impact copolymers was for example raised in US 7196140 B2. Various approaches have been described to limit the carryover of hydrogen from the upstream reactor to the downstream copolymerization reactor, by separating gas phase and polymer during the transfer stage and selectively transferring only the polymer to the copolymerization reactor, thereby creating a copolymerization gas composition with reduced hydrogen content. Additional examples are contained in *e.g.,* US 4420592, US 6069212, EP 2087015 B 1, EP 2190889 B1, EP 2803680 A1, US 11292854 B2. While such systems can succeed in decoupling the gas composition of the downstream and upstream reactors, they consist of several vessels with many fluid connections that are difficult to control and operate.

Accordingly, there is a need for easier control over hydrogen content in the gas phase of downstream copolymerization reactor.

### SUMMARY OF THE DISCLOSURE

Embodiments disclosed herein provide a process and a system for the production of polypropylene. The process and system may advantageously perform the removal of heat of polymerization in a very cost-efficient manner.

Among others, embodiments disclosed herein may result in a significant reduction of energy consumption of the recirculation gas cooling loop. Moreover, a dedicated refrigeration system may not be required, or may be largely downsized when compared to conventional processes and systems.

In one aspect, embodiments disclosed herein relate to a process for the production of polypropylene comprising: feeding at least one olefin monomer stream to a polymerization zone, wherein the olefin monomer is reacted to produce a polymerization product stream; feeding a recirculation gas stream from the gas-phase polymerization zone to a compressor, forming a compressed recirculation gas stream; feeding the compressed recirculation gas stream to a first heat exchanger, forming a cooled compressed recirculation gas stream comprising a liquified recirculation gas and optionally a vapor phase; feeding the cooled compressed recirculation gas stream to a phase separator, forming a liquified recirculation gas stream and a vapor phase stream; feeding the vapor phase stream to the hot side of a second heat exchanger; feeding the liquified recirculation gas stream to a pressure regulator, forming a flashed recirculation gas stream; feeding the flashed recirculation gas stream to the cold side of the second heat exchanger; recovering an outlet vapor stream and an outlet liquid stream from the hot side of the second heat exchanger; recovering an outlet vapor stream and at least one outlet liquid stream from the cold side of the second heat exchanger; and feeding a recycle outlet liquid stream from the cold side of the second heat exchanger to the polymerization zone.

In a further aspect, embodiments disclosed herein relate to a system for the production of polypropylene comprising: a polymerization zone configured to convert at least one olefin monomer stream to polypropylene and produce a polymerization product stream; a compressor configured to form a compressed recirculation gas stream from a recirculation gas stream originating from the polymerization zone; a first heat exchanger configured to form a cooled compressed recirculation gas stream from the compressed recirculation gas stream, comprising a liquified recirculation gas and optionally a vapor phase; a phase separator configured to form a liquified recirculation gas stream and a vapor phase stream from the cooled compressed recirculation gas stream; a pressure regulator configured to form a flashed recirculation gas stream from the liquified recirculation gas stream; a second heat exchanger having a hot side configured to receive the vapor phase stream and a cold side configured to receive the flashed recirculation gas stream; wherein the second heat exchanger is configured to form an outlet vapor stream and an outlet liquid stream from the hot side thereof, and an outlet vapor stream and at least one outlet liquid stream from the cold side thereof; and a flow line for feeding a recycle outlet liquid stream from the cold side of the second heat exchanger to the polymerization zone.

In the process and system according to the aspects described above, heat rejection may occur with a high degree of condensation of the recirculation gas, without rejecting heat to a refrigerant or chilled water. The high degree of condensation reduces the recirculation gas flow rate and thereby the power consumption of the compressor. The omission of cooling by external refrigeration may further reduce power consumption.

These results are achieved by intensification of the recirculation gas cooling loop, in which the liquified recirculation gas itself may serve as refrigerant. The combination of two heat exchangers provides a two-step distillation sequence that allows light components, such as, for example, H₂, CH₄ or N₂, the presence of which hinders condensation, to be efficiently purged from the polymerization zone and the recirculation gas cooling loop.

Since the main, liquified recirculation gas stream is separated downstream from the first heat exchanger, it still has a relatively high temperature compared to the temperature it would reach if it was cooled against *e.g.,* a refrigerant, and therefore contains less dissolved light components. This allows to purge more light components, which increases the degree of condensation to a point where the heat rejection against cooling water may become effective without external refrigeration and/or without increasing the recirculation gas flow rate.

The separated vapor stream remaining after the first heat exchanger is distilled further in the second heat exchanger, leaving a relatively small purge stream to remove light components from the recirculation gas. Surprisingly, the higher temperature the first gas-liquid separation takes place at has the unexpected consequence of increasing the overall degree of condensation.

Among the benefits of the process and the system of the present disclosure, embodiments disclosed herein may further allow to simultaneously and independently purge vapor and liquid bleeds at different pressure levels, *e.g.,* purge vapor bleed at a high-pressure level and liquid bleed at a low-pressure level, thereby resulting in defining optimized outlets for purging in particular hydrogen, nitrogen, methane, and propylene. Such an optimized purging may *inter alia* lead to reduced hydrogen content in the gas phase of the polymerization reactor. As mentioned above, reduced hydrogen content in the copolymerization reactor has been one of the objectives of developing product transfer systems with reduced gas carryover to the copolymerization reactor. Moreover, the optimized purging resulting from the process and system according to one or more embodiments of the present disclosure will be more effective in reducing hydrogen content in the polymerization reactor when compared to the system described In US 6812301 B2, wherein the bleed stream is taken from the main recirculation gas stream.

Other aspects and advantages will be apparent from the following description and the appended claims, that define further embodiments of the process and the system.

### BRIEF DESCRIPTION OF DRAWINGS

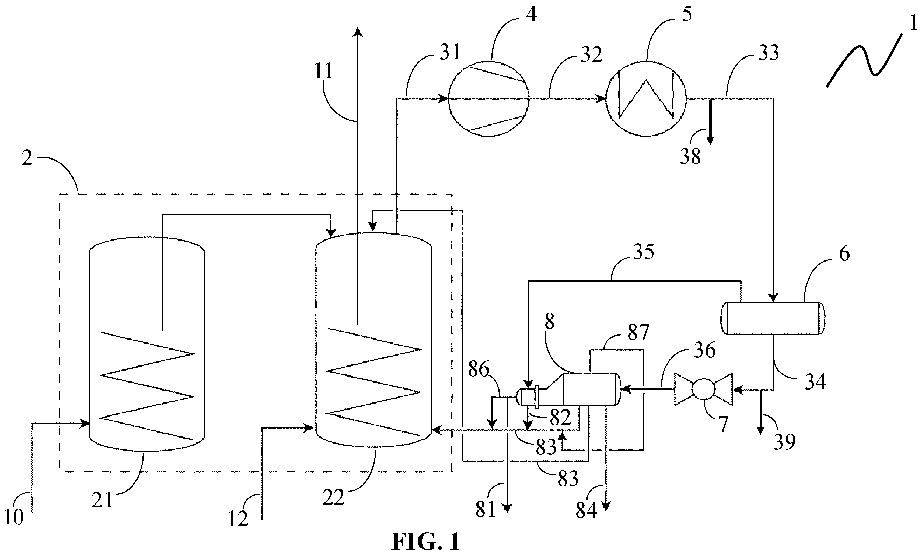

Figure 1 illustrates a simplified diagram of a system for the production of polypropylene according to one or more embodiments.

### DETAILED DESCRIPTION OF EMBODIMENTS

In one aspect, embodiments disclosed herein relate to a process for the production of polypropylene comprising: feeding at least one olefin monomer stream to a polymerization zone, wherein the olefin monomer is reacted to produce a polymerization product stream; feeding a recirculation gas stream from the gas-phase polymerization zone to a compressor, forming a compressed recirculation gas stream; feeding the compressed recirculation gas stream to a first heat exchanger, forming a cooled compressed recirculation gas stream comprising a liquified recirculation gas and optionally a vapor phase; feeding the cooled compressed recirculation gas stream to a phase separator, forming a liquified recirculation gas stream and a vapor phase stream; feeding the vapor phase stream to the hot side of a second heat exchanger; feeding the liquified recirculation gas stream to a pressure regulator, forming a flashed recirculation gas stream; feeding the flashed recirculation gas stream to the cold side of the second heat exchanger; recovering an outlet vapor stream and an outlet liquid stream from the hot side of the second heat exchanger; recovering an outlet vapor stream and at least one outlet liquid stream from the cold side of the second heat exchanger; and feeding a recycle outlet liquid stream from the cold side of the second heat exchanger to the polymerization zone.

In another aspect, embodiments disclosed herein relate to a system for the production of polypropylene comprising: a polymerization zone configured to convert at least one olefin monomer stream to polypropylene and produce a polymerization product stream; a compressor configured to form a compressed recirculation gas stream from a recirculation gas stream originating from the polymerization zone; a first heat exchanger configured to form a cooled compressed recirculation gas stream from the compressed recirculation gas stream, comprising a liquified recirculation gas and optionally a vapor phase; a phase separator configured to form a liquified recirculation gas stream and a vapor phase stream from the cooled compressed recirculation gas stream; a pressure regulator configured to form a flashed recirculation gas stream from the liquified recirculation gas stream; a second heat exchanger having a hot side configured to receive the vapor phase stream and a cold side configured to receive the flashed recirculation gas stream; wherein the second heat exchanger is configured to form an outlet vapor stream and an outlet liquid stream from the hot side thereof, and an outlet vapor stream and at least one outlet liquid stream from the cold side thereof; and a flow line for feeding a recycle outlet liquid stream from the cold side of the second heat exchanger to the polymerization zone.

In the following, embodiments applicable both to the process and the system are described.

At least one olefin monomer stream is fed to the polymerization zone. For example, one to four streams, *e.g*., two olefin monomer streams are fed to the polymerization zone. According to one or more embodiments, the at least one olefin monomer stream fed to the polymerization zone comprises propylene. When a plurality of olefin monomer streams is fed to the polymerization zone, at least one monomer olefin stream comprises propylene. According to one or more embodiments, at least one olefin monomer stream may comprise one or more olefins other than propylene, either instead of, or in addition to propylene. Such other olefins may be used as comonomers to produce, *e.g*., copolymers or terpolymers of propylene.

For example, olefin monomers that may be comprised into one or more olefin monomer streams of the plurality of streams may be one or more of (co)monomers such as ethylene and α-olefins, for example selected in the group comprising ethylene, butene, pentene, hexene, octene, and combination thereof.

The olefin monomers contained in the at least one olefin monomer stream are reacted in the polymerization zone to produce a polymerization product stream. For example, a polymerization product comprised in the polymerization product stream may be an impact copolymer of polypropylene, a homopolymer of polypropylene, or a random copolymer of polypropylene.

According to one or more embodiments, the process comprises adding propylene, a polypropylene forming catalyst, and other optional compounds to the polymerization zone and producing a polypropylene product of the types listed above.

According to one or more embodiments, the process may thus comprise feeding any catalyst suitable for the polymerization of propylene to the polymerization zone, such as, for example, any catalyst selected from the group comprising Ziegler-Natta catalysts and single site catalysts, such as metallocene catalysts.

According to one or more embodiments, the catalyst may comprise a Ziegler-Natta catalyst. Ziegler-Natta catalysts comprise magnesium/titanium/electron donor complexes, optionally supported on a suitable support, for example including silica or MgClz, used in conjunction with an organo-aluminum cocatalyst and an external selectivity control agent, such as for example an aromatic carboxylic acid ester or an alkoxy silane compound. Suitable Ziegler-Natta catalyst may include titanium-based catalysts, such as the catalysts described in US 4 376 062 A, US 4 379 758 A, US 5 066 737 A and US 9 522 968 B2.

According to one or more embodiments, the catalyst may comprise a metallocene catalyst. A metallocene catalyst comprises organometallic coordination complexes of one or more ligands in association with a metal atom. Examples of suitable metallocene catalysts are described, for example, in US 7 169 864 B2.

According to one or more embodiments, the process may further comprise feeding additional optional compounds to the polymerization zone. The additional optional compounds may comprise, for example, hydrogen to control the molecular weight of the polymerization product, and/or polymerization additives, such as, for example, a static control agent or an activity limiting agent (e.g., ATMER 163, or isopropanol, as described *e.g*., in US 6,174,969 B1).

According to one or more embodiments, depending on the required capacity and polymerization product range, the polymerization zone may comprise a plurality of reactors, *e.g.,* at least two reactors. For example, the at least two reactors may be independently a bulk reactor, or a gas-phase reactor. According to one or more embodiments, at least one reactor of the polymerization zone is a gas-phase reactor. The gas-phase reactor(s) may for example be a stirred bed reactor, such as for example a horizontal gas-phase stirred bed reactor or a vertical gas-phase stirred bed reactor, a fluidized bed reactor, and combinations thereof. According to one or more embodiments, the polymerization zone does not comprise any fluidized bed reactor.

According to one or more embodiments, the polymerization zone comprises at least two reactors, for example of any of the types or combinations indicated above. According to one or more embodiments, the at least two reactors are arranged in series. For example, two reactors may be arranged in series to produce impact copolymers of polypropylene. According to one or more embodiments, one or more reactors of the plurality of reactors comprise a corresponding recirculation gas cooling loop such as described in the present disclosure to remove heat of polymerization therefrom.

According to one or more embodiments, the polymerization zone has a cascade configuration wherein a first reactor and a second reactor are placed in series. According to one or more embodiments, the first reactor is a bulk reactor and the second reactor is a gas-phase stirred bed reactor. According to one or more embodiments, the first reactor is a gas-phase vertical stirred bed reactor and the second reactor is a gas-phase vertical stirred bed reactor.

According to one or more embodiments, the first reactor may for example be fed with a first olefin monomer stream comprising mainly propylene, *e.g.,* at least 60% v/v propylene, *e.g.,* at least 70% v/v propylene, *e.g.,* at least 80% v/v propylene, *e.g.,* at least 90% v/v propylene, *e.g.,* at least 95% v/v propylene, *e.g.,* at least 99.5% v/v propylene, and optionally a minor amount another olefin, *e.g.,* less than 10% v/v ethylene, *e.g.,* less than 5% v/v ethylene.

According to one or more embodiments, the second reactor may for example be fed with a second olefin monomer stream comprising mainly ethylene, *e.g.,* at least 50% v/v ethylene, *e.g.,* at least 75% v/v ethylene, *e.g.,* at least 90% v/v ethylene, *e.g.,* at least 99.8% v/v ethylene, and optionally a minor amount propylene, *e.g*., less than 50% v/v propylene, *e.g*., less than 30% v/v propylene. In addition, monomer feed rates may be selected to achieve a certain ratio of partial pressure of the reactive monomers in the polymerization zone, *e.g.,* in the second reactor.

According to one or more embodiments, in a configuration where the first reactor is mainly fed with propylene and the second reactor mainly with ethylene, impact copolymers of propylene may be advantageously formed, such as described, for example, in US 4977210 A or in US 6174969 B 1.

According to one or more embodiments in which a cascade configuration wherein a first reactor and a second reactor are placed in series, the pressure and temperature ranges of the first reactor may range from 15 bar to 50 bar and from 50°C to 120°C, respectively, while the pressure and temperature ranges of the second reactor may range from 5 bar to 35 bar and from 30°C to 100°C, respectively.

A "recirculation gas", *i.e.,* a stream of overhead gases comprising unreacted olefin monomer, may be withdrawn from a reactor of the polymerization zone in which polymerization takes place, cooled and then recycled to the reactor, thereby providing cooling to the reactor and removing the heat of polymerization therefrom. The recirculation gas is thereby circulated in a "recirculation gas cooling loop" or "recycle gas cool loop" as described in the present disclosure, *i.e.,* comprising a compressor, a first heat exchanger, a phase separator, a pressure regulator and a second heat exchanger. According to one or more embodiments in which the polymerization zone comprises a plurality of reactors, one or more reactors of the plurality of reactors may comprise a corresponding recycle gas cool loop.

The compressor is configured to form a compressed recirculation gas stream from a recirculation gas stream originating from the polymerization zone. The discharge pressure of the compressor may be selected in a predetermined range. According to one or more embodiments, the compressor has a discharge pressure ranging from 25 bar to 50 bar. For example, according to one or more embodiments directed to the production of impact copolymers of polypropylene, the discharge pressure may range from 35 bar to 50 bar. According to one or more embodiments directed to the production of homopolymers or random copolymers of polypropylene, the discharge pressure may range from 25 bar to 50 bar, *e.g.,* from 25 to 35 bar. The compressor may contain a variable speed drive to minimize power consumption.

The compressed recirculation gas stream may then be fed to the first heat exchanger. The first heat exchanger is configured to form a cooled compressed recirculation gas stream therefrom. Such a cooled compressed recirculation gas steam comprises a liquified recirculation gas, and optionally a vapor phase. According to one or more embodiments, the heat rejection of the compressed recirculation gas stream fed to the first heat exchanger may occur against cooling water in the first heat exchanger. For example, according to one or more embodiments, exclusively cooling water is used as coolant in the first heat exchanger, and no refrigerant or chilled water is used. According to one or more embodiments, the first heat exchanger comprises one or more shell-and-tube heat exchangers, such as for example horizontal shell-and-tube heat exchangers, which may for example be stacked vertically. According to one or more embodiments, the first heat exchanger has a configuration wherein two or more shell-and-tube heat exchangers are placed in series, for example on both tube-side and shell-side in counter-flow configuration.

According to one or more embodiments, the cooled compressed recirculation gas stream has a temperature ranging from 15 °C to 50 °C, *e.g.,* from 20 °C to 45 °C, *e.g.,* from 25 °C to 40 °C. The temperature of the cooled compressed recirculation gas stream may for example depend on the available temperatures of a cooling water system providing cooling water to the first heat exchanger. According to one or more embodiments, such a cooling water system may be comprised in the system according to the present disclosure. As described above, the cooled compressed recirculation gas stream comprises a liquified recirculation gas, and optionally a vapor phase. Indeed, in certain embodiments, the compressed recirculation gas stream will totally condense in the first heat exchanger, while in other embodiments, it will partly condense. In both cases, the cooled compressed recirculation gas stream, *i.e.,* either under the form of a liquid gas mixture, or under the form of a totally liquified gas only, is fed to the phase separator.

The phase separator is configured to form a liquified recirculation gas stream and a vapor phase stream from the cooled compressed recirculation gas stream. According to one or more embodiments, the phase separator may for example comprise a phase separation vessel, a pressure control valve, and optionally a pressure transducer. The phase separator may operate, for example, at a pressure substantially equal to the outlet pressure of the first heat exchanger. The operating pressure of the phase separator may be lowered by a pressure control valve to produce or increase the vapor phase. Such a pressure control valve, *e.g.,* an expansion valve, may for example be comprised in the phase separator, or placed upstream from it, between the first heat exchanger and the pressure regulator. According to one or more embodiments, the separation in the phase separator is carried out at the outlet temperature of the first heat exchanger or at a lower temperature resulting from isenthalpic expansion of the recirculation gas.

A liquified recirculation gas stream and a vapor phase stream are thus formed and separated by the phase separator. The liquified recirculation gas stream may then be fed to the pressure regulator, while the vapor phase stream may be fed to the second heat exchanger.

The pressure regulator is configured to form a flashed recirculation gas stream from the liquified recirculation gas stream. According to one or more embodiments, the pressure regulator comprises an expansion valve, and optionally a pressure transducer. The discharge pressure of the pressure regulator may be selected in a predetermined range. The pressure regulator may for example have a discharge pressure ranging from 0.5 bar to 20 bar above the pressure in a reactor of the polymerization zone, *e.g.,* the reactor from which the recirculation gas stream is withdrawn. For example, such a pressure difference may compensate pressure drop, and may range from 1 to 5 bar. According to one or more embodiments, the formed flashed recirculation gas stream has a temperature ranging from 5 °C to 35 °C, for example from 10°C to 25 °C.

The flashed recirculation gas stream may be fed to the cold side of the second heat exchanger. The second heat exchanger has a hot side configured to receive the vapor phase stream originating from the phase separator, as described above, and a cold side configured to receive the flashed recirculation gas stream.

The second heat exchanger is configured to form at least one outlet vapor stream and at least one outlet liquid stream from the hot side thereof. The second heat exchanger is further configured to form at least one outlet vapor stream and at least one outlet liquid stream from the cold side thereof. For example, the process may comprise recovering an outlet vapor stream and an outlet liquid stream from the hot side of the second heat exchanger, and recovering an outlet vapor stream and at least one outlet liquid stream from the cold side of the second heat exchanger.

According to one or more embodiments, the second heat exchanger is a two-pass U-bundle kettle type heat exchanger. The flashed recirculation gas stream may for example be fed to an inlet located on the shell side of the second heat exchanger.

It may be said that, differently from conventional polymerization heat rejection systems, the recirculation gas itself may be used as refrigerant in the process and system of the present disclosure. Indeed, within the above-described cooling loop, the recirculation gas is first compressed via the compressor, then condensed via the first heat exchanger (thereby rejecting heat to the outside), expanded via the pressure regulator, and finally partially evaporated via the second heat exchanger (thereby providing refrigeration usually provided by a dedicated refrigeration cycle).

To close the recirculation gas cooling loop, a recycle outlet liquid stream from the cold side of the second heat exchanger is fed to the polymerization zone, *e.g.,* to the reactor from which the recirculation gas stream is withdrawn.

As described above, the process and system according to one or more embodiments of the present disclosure may further allow to simultaneously and independently purge vapor and liquid bleeds at different pressure levels, *e.g.,* purge vapor bleed at a high-pressure level and liquid bleed at a low-pressure level, thereby resulting in defining optimized outlets for purging hydrogen and/or propylene and/or inerts such as propane and nitrogen and/or lights such as methane.

According to one or more embodiments, the process comprises withdrawing a portion, or "vapor bleed", from the outlet vapor stream from the hot side of the second heat exchanger. According to one or more embodiments, the complete flow of the outlet vapor stream from the hot side of the second heat exchanger may be withdrawn as vapor bleed. Such a vapor bleed may for example be fed to an optional external recovery unit. Purging via such a vapor bleed directly influences the degree of condensation achievable in the first heat exchanger. In addition, since the vapor bleed comprises hydrogen, such purging may result in improved control of the molecular weight of the polymerization product.

Likewise, the process may comprise withdrawing a portion, or "liquid bleed", from the at least one outlet liquid stream from the cold side of the second heat exchanger. The liquid bleed may for example be fed to an optional external recovery unit and/or may be used to influence gas composition and/or pressure control in the polymerization zone, in order to set a specific ratio of the olefin monomers used in polymerization. This liquid bleed has the highest propylene content. Other liquid bleeds may be withdrawn, for example from a liquid outlet of the cold side of the first heat exchanger and/or from the cooled compressed recirculation gas stream. Liquid bleeds may also be withdrawn from a liquid outlet of the phase separator and/or from the liquified recirculation gas stream.

According to one or more embodiments, the process further comprises adding the outlet liquid stream from the hot side of the second heat exchanger, or a portion thereof, to the phase separator and/or to the liquified recirculation gas stream and/or to the flashed recirculation gas stream and/or to the recycle outlet liquid stream. Such an addition to the phase separator and/or to the liquified recirculation gas stream and/or to the flashed recirculation gas stream will provide additional cooling to the second heat exchanger. According to one or more embodiments, the process further comprises adding the outlet vapor stream from the cold side of the second heat exchanger, or a portion thereof, to the recycle outlet liquid stream. Adding the outlet vapor stream from the cold side of the second heat exchanger, or a portion thereof, to the recycle outlet liquid stream will close the recirculation loop for a larger share of the overall recirculation gas stream, thereby improving process control and reducing off-gas processing requirements. According to one or more embodiments, the process further comprises adding a recycle outlet vapor stream from the hot side of the second heat exchanger to the recycle outlet liquid stream. Adding a recycle outlet vapor stream from the hot side of the second heat exchanger to the recycle outlet liquid stream may for example serve to control hydrogen content in the reactor gas phase when further hydrogen reduction is not required.

According to one or more embodiments, the process further comprises decreasing the pressure of the cooled compressed recirculation gas stream via a pressure control valve, for example an expansion valve. The pressure control valve may be placed between the first heat exchanger and the phase separator, or comprised in the phase separator. The hydrogen purge may thereby be increased, by decreasing the pressure in the phase separator.

According to one or more embodiments, feeding a recycle outlet liquid stream from the cold side of the second heat exchanger to the gas-phase polymerization zone comprises introducing the recycle outlet liquid stream to the bottom and/or to the top of a reactor of the gas-phase polymerization zone, *e.g.,* the reactor from which the recirculation gas stream is withdrawn. In certain embodiments in which the recycle outlet liquid stream is fed to the top of a reactor, the introduction is done, for example, via a centric spray pipe, as disclosed in, for example, WO 2020/153959 A1. The recycle outlet liquid stream may for example be sprayed on the surface of a powder comprising *e.g.,* active catalyst and polypropylene product in the reactor and provide significant cooling. Such a possibility of lowering the temperature in the top section of the reactor leads to improved reactor operability.

According to one or more embodiments in which the outlet liquid stream from the hot side of the second heat exchanger, or a portion thereof, is added to the phase separator and/or to the liquified recirculation gas stream, the second heat exchanger is located physically above the phase separation vessel, so that the outlet liquid stream from the hot side thereof flows by gravity.

Referring now to Figure 1, a system for the production of polypropylene according to one or more embodiments is generally designated by reference number 1.

In line with the present disclosure, the embodiment shown in Figure 1 shows a system 1 comprising a polymerization zone 2 and a recycle gas cool loop. The recycle cool loop includes a compressor 4, a first heat exchanger 5, a phase separator 6, a pressure regulator 7, and a second heat exchanger 8.

The polymerization zone 2 may comprise at least two reactors, for example gas-phase reactors, such as vertical gas-phase stirred bed reactors 21 and 22 arranged in series. Although Figure 1 shows this type of reactor, other types of reactors may be used according to one or more embodiments. According to one or more embodiments, at least one reactor of the polymerization zone 2 is a gas-phase reactor. Suitable reactors may include any reactors suitable for the polymerization of propylene, either batch-wise, semi-continuously, or continuously, such as fluidized bed reactors or horizontal or vertical stirred powder bed reactors.

In the embodiment shown in Figure 1, a first gas-phase stirred bed reactor 21 is fed with a first olefin monomer stream 10 containing, for example, mainly propylene. A second gas-phase stirred bed reactor 22, which is connected downstream from reactor 21, is fed with a second olefin monomer stream 12 containing, for example, mainly ethylene, and optionally propylene. In such a configuration, impact copolymers polypropylene may be produced. However, the system could attain, among others, energy saving, structural simplification and size reduction also by producing other types of polypropylene, such as *e.g*., homopolymers or random copolymers, which may also be produced according to the present disclosure. Indeed, these technical effects are attained by rejecting heat to the recycle gas cool loop, as described in more detail in the following.

Additional components (not shown) may be fed to the polymerization zone 2. Any catalyst suitable for the polymerization of propylene may be fed to the polymerization zone 2, such as, for example, a Ziegler-Natta catalyst. Additional components may include hydrogen, for example to control the molecular weight of the polymerization product, and/or optional comonomer(s), such as ethylene and/or butene, and/or an organo-aluminum cocatalyst and/or an external selectivity control agent, such as for example an aromatic carboxylic acid ester or an alkoxy silane compound, and/or a component to control the catalyst activity in a cascade reactor, such as isopropanol.

The gas-phase stirred bed reactor 22 produces a polymerization product 11. The polymerization product 11 may be a homopolymer or a copolymer, depending on whether comonomers are fed to the polymerization zone 2.

In general, the polymerization may be carried out at a temperature in the range of from about 30°C to about 120°C, for example from about 30°C to about 100°C and/or at a pressure in the range of from about 1 bar to 100 bar, for example from about 5 bar to about 50 bar.

In a cascade reactor configuration such as in the embodiment shown in Figure 1, wherein a first reactor 21 and a second reactor 22 are placed in series, the pressure and temperature ranges of the first reactor 21 may range from 15 bar to 50 bar and from 50°C to 120°C, respectively. The pressure and temperature ranges of the second reactor 22 may range from 5 bar to 35 bar and from 30°C to 100°C, respectively.

The reaction time may depend on the selected reaction conditions. According to one or more embodiments, the reaction time may be from about 0.2 hours to about 5 hours, for example from about 0.5 hours to about 2 hours.

In the embodiment shown, a product stream 11 leaves the gas-phase stirred bed reactor 22. The product stream 11 may contain, in addition to the polymerization product, various components including unreacted propylene, propane, unreacted comonomers, hydrogen, incompletely formed polymers, and any other components used in the process. These components may be removed from the polymerization product by using, for example, a polymer separation system.

In line with the present disclosure, a recirculation gas stream 31 is withdrawn from the polymerization zone 2 to be fed to a recirculation gas cooling loop (or recycle gas cool loop) starting with a compressor 4, which is arranged downstream of the gas-phase stirred bed reactor 22 with reference to the direction of the recirculation gas stream 31. The compressor 4 is configured to form a compressed recirculation gas stream 32. The discharge pressure of the compressor 4 may for example range from 25 bar to 50 bar. Although not shown in the Figure, a cyclone and/or filter system may be placed upstream from the compressor 4 to prevent polymer fines from entering the compressor and downstream equipment.

The system 1 further comprises the first heat exchanger 5. The first heat exchanger 5 is configured to form a cooled compressed recirculation gas stream 33 from the compressed recirculation gas stream 32. The cooled compressed recirculation gas stream 33 comprises a liquified recirculation gas and optionally a vapor phase. According to one or more embodiments, exclusively cooling water is used as coolant in the first heat exchanger the first heat exchanger 5. According to one or more embodiments, the compressed recirculation gas stream 32 is cooled in the first heat exchanger 5 to 15 °C to 50 °C, for example to 20 °C to 45 °C, for example to 25 °C to 45 °C. The first heat exchanger 5 is not particularly limited to any specific design. A shell-and-tube heat exchanger, or two or more shell-and-tube exchangers, *e.g*., with shell-side and tube-side arranged in series and in counter-flow configuration may for example be used. Using two or more shell-and-tube heat exchangers in series allows cost-efficient and reliable service when available cooling water temperatures require a close approach temperature or a temperature cross.

The system 1 further comprises a phase separator 6, configured to form a liquified recirculation gas stream 34 and a vapor phase stream 35 from the cooled compressed recirculation gas stream 33. The phase separator 6 may operate, for example, at a pressure substantially equal to the outlet pressure of the first heat exchanger 5. The operating pressure of the phase separator 6 may be lowered by a control valve to produce or increase the vapor phase. According to one or more embodiments, the separation in the phase separator 6 is carried out at the outlet temperature of the first heat exchanger 5 or at a lower temperature resulting from isenthalpic expansion of the recirculation gas.

A liquified recirculation gas stream 34 and a vapor phase stream 35 are formed and separated by the phase separator 6. The liquified recirculation gas stream may then be fed to the pressure regulator 7, while the vapor phase stream 35 may be fed to the second heat exchanger 8.

The pressure regulator 7 may for example be an expansion valve, and is configured to form a flashed recirculation gas stream 36 from the liquified recirculation gas stream 34. According to one or more embodiments, the pressure regulator 7 has a discharge pressure ranging from 0.5 bar to 20 bar above the pressure in a reactor of the polymerization zone 2, *e.g.,* the reactor from which the recirculation gas stream 31 is withdrawn. In the embodiment shown in Figure 1, the discharge pressure may for example be relative to the pressure inside reactor 22. According to one or more embodiments, the formed flashed recirculation gas stream 36 has a temperature ranging from 5 °C to 35 °C, for example from 10°C to 25 °C.

The system 1 further comprises a second heat exchanger 8 having a hot side configured to receive the vapor phase stream 35 and a cold side configured to receive the flashed recirculation gas stream 36. In the embodiment shown in Figure 1, the second heat exchanger 8 is configured to form an outlet vapor stream 86 and an outlet liquid stream 82 from the hot side thereof. In this embodiment, the second heat exchanger is further configured to form an outlet vapor stream 87 and two outlet liquid streams 83, 84 from the cold side thereof. In other embodiments, only one, or more than two liquid streams may be formed from the cold side of the second heat exchanger 8. The second heat exchanger 8 may for example be a two-pass U-bundle kettle type heat exchanger, such as in the embodiment shown in Figure 1, and have an inlet located on the shell side to which the flashed recirculation gas stream 36 is fed. However, other types of exchangers may be envisaged to fulfill the functions of the second heat exchanger 8.

In order to close the recirculation gas cooling loop, the system 1 further comprises a flow line for recycling outlet liquid stream 83, from the cold side of the second heat exchanger 8 to the polymerization zone 2. According to one or more embodiments, feeding the recycle outlet liquid stream 83 from the cold side of the second heat exchanger 8 to the gas-phase polymerization zone 2 may comprise introducing the recycle outlet liquid stream 83 to the bottom and/or to the top of a reactor of the gas-phase polymerization zone 2. In the embodiment shown in Figure 1, the recycle outlet liquid stream 83 is fed both to the bottom and to the top of reactor 22.

According to one or more embodiments, the system may further comprise a flow line for withdrawing a portion, or the complete flow from the outlet vapor stream 86 from the hot side of the second heat exchanger 8. In the embodiment shown in Figure 1 a portion 81 is withdrawn as vapor bleed, and fed to an optional external recovery unit (not shown). When only a portion 81 is withdrawn, a recycle outlet vapor stream 86 from the hot side of the second heat exchanger may for example be added to the recycle outlet liquid stream 83, as illustrated in Figure 1.

Optionally, as further shown in said figure, a flow line may be provided for withdrawing a portion 84 from the at least one outlet liquid stream from the cold side of the second heat exchanger 8. The flow line(s) carrying the portion 84 may directly be attached to a liquid outlet on the cold side of the second heat exchanger 8 such as shown on Figure 1, and/or be attached to the flow line carrying the recycle outlet liquid stream 83.

The portion 84 may thus be withdrawn as liquid bleed, and fed to an optional external recovery unit (not shown). Other liquid bleeds may be withdrawn, for example from a liquid outlet of the cold side of the first heat exchanger 5 and/or from the cooled compressed recirculation gas stream 33, as shown in Figure 1 with reference 38. Liquid bleeds may also be withdrawn from a liquid outlet of the phase separator 6 and/or from the liquified recirculation gas stream 34, as further shown in Figure 1 with reference 39.

According to one or more embodiments, a pressure control valve (not shown), *e.g*., an expansion valve, is located between the first heat exchanger 5 and the phase separator 6, or comprised in the phase separator 6. The pressure control valve may allow to decrease the pressure of the cooled compressed recirculation gas stream 33, thereby decreasing the pressure in the phase separator 6. In this manner, hydrogen purging may be increased.

According to one or more embodiments, the system 1 may further comprise a flow line for adding the outlet liquid stream 82 from the hot side of the second heat exchanger 8, or a portion thereof, to the phase separator 6 and/or to the liquified recirculation gas stream 34 and/or to the flashed recirculation gas stream 36 and/or to the recycle outlet liquid stream 83, even though only the latter alternative is adopted in the embodiment shown in Figure 1. A flow line for adding the outlet vapor stream 87 from the cold side of the second heat exchanger 8, or a portion thereof, to the recycle outlet liquid stream 83 may also be provided in the system according to one or more embodiments.

According to one or more embodiments, in which the system comprises a flow line for adding the outlet liquid stream 82 from the hot side of the second heat exchanger 8, or a portion thereof, to the phase separator 6 and/or to the liquified recirculation gas stream 34, the second heat exchanger 8 may be located physically above the phase separation vessel 6, so that the outlet liquid stream 82 from the hot side thereof flows by gravity.

As described above, embodiments herein provide a process and a system for the production of polypropylene that may advantageously reduce energy requirements of the recirculation gas cooling loop, and thus also overall energy requirements of the process and system. Among the benefits of the process and system of the present disclosure, compared to prior practice, the invention may for example reduce the power consumption of impact copolymer production by more than 20 kWh per ton of impact copolymer produced. This amounts to 5 GWh/year for a 500 KTA plant with 50% impact copolymer share. Energy consumption is a prime criterion during the polypropylene technology provider selection process.

Additionally, the system may have a reduced size since refrigeration is no longer required for reactor cooling. Depending on other users, the refrigeration plant may be deleted or downsized.

Additionally, the process and system may produce a high-quality polymerization product, with improved intrinsic viscosity (IV).

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A process for producing polypropylene comprising:
feeding at least one olefin monomer stream (10, 12) to a polymerization zone (2) wherein olefin monomers are reacted to produce a polymerization product stream (11);
feeding a recirculation gas stream (31) from the gas-phase polymerization zone (2) to a compressor (4), forming a compressed recirculation gas stream (32);
feeding the compressed recirculation gas stream (32) to a first heat exchanger (5), forming a cooled compressed recirculation gas stream (33) comprising a liquified recirculation gas and optionally a vapor phase;
feeding the cooled compressed recirculation gas stream (33) to a phase separator (6), forming a liquified recirculation gas stream (34) and a vapor phase stream (35);
feeding the vapor phase stream (35) to the hot side of a second heat exchanger (8);
feeding the liquified recirculation gas stream (34) to a pressure regulator (7), forming a flashed recirculation gas stream (36);
feeding the flashed recirculation gas stream (36) to the cold side of the second heat exchanger (8);
recovering an outlet vapor stream (86) and an outlet liquid stream (82) from the hot side of the second heat exchanger (8);
recovering an outlet vapor stream (87) and at least one outlet liquid stream from the cold side of the second heat exchanger (8); and
feeding a recycle outlet liquid stream (83) from the cold side of the second heat exchanger (8) to the polymerization zone (2).

2. The process of claim 1, further comprising:
withdrawing a portion (81), or the complete flow from the outlet vapor stream (86) from the hot side of the second heat exchanger (8).

3. The process of claim 1 or claim 2, further comprising:
withdrawing a portion (84) from the at least one outlet liquid stream from the cold side of the second heat exchanger (8).

4. The process of any one of claims 1-3, further comprising:
adding the outlet liquid stream (82) from the hot side of the second heat exchanger (8), or a portion thereof, to the phase separator (6) and/or to the liquified recirculation gas stream (34) and/or to the flashed recirculation gas stream (36) and/or to the recycle outlet liquid stream (83); and/or
adding the outlet vapor stream (87) from the cold side of the second heat exchanger (8), or a portion thereof, to the recycle outlet liquid stream (83).

5. The process of any one of claims 1-4, further comprising:
adding a recycle outlet vapor stream (86) from the hot side of the second heat exchanger (8) to the recycle outlet liquid stream (83).

6. The process of any one of claims 1-5, further comprising:
withdrawing a portion (38) from a liquid outlet of the cold side of the first heat exchanger (5) and/or from the cooled compressed recirculation gas stream (33); and/or
withdrawing a portion (39) from a liquid outlet of the phase separator (6) and/or from the liquified recirculation gas stream (34).

7. The process of any one of claims 1-6, further comprising:
decreasing the pressure of the cooled compressed recirculation gas stream (33) via a pressure control valve located between the first heat exchanger (5) and the phase separator (6), or comprised in the phase separator (6).

8. The process of any one of claims 1-7, wherein the first heat exchanger (5) is a horizontal shell and tube exchanger.

9. The process of any one of claims 1-8, wherein the second heat exchanger (8) is a two-pass U-bundle kettle type heat exchanger.

10. The process of any one of claims 1-9, wherein feeding a recycle outlet liquid stream (83) from the cold side of the second heat exchanger (8) to the gas-phase polymerization zone (2) comprises:
introducing the recycle outlet liquid stream (83) to the bottom and/or to the top of a reactor of the gas-phase polymerization zone (2).

11. A system (1) for producing polypropylene comprising:
a polymerization zone (2) configured to convert at least one olefin monomer stream (10, 12) to polypropylene and produce a polymerization product stream (11);
a compressor (4) configured to form a compressed recirculation gas stream (32) from a recirculation gas stream (31) originating from the polymerization zone (2);
a first heat exchanger (5) configured to form a cooled compressed recirculation gas stream (33) from the compressed recirculation gas stream (32), comprising a liquified recirculation gas and optionally a vapor phase;
a phase separator (6) configured to form a liquified recirculation gas stream (34) and a vapor phase stream (35) from the cooled compressed recirculation gas stream (33);
a pressure regulator (7) configured to form a flashed recirculation gas stream (36) from the liquified recirculation gas stream (34);
a second heat exchanger (8) having a hot side configured to receive the vapor phase stream (35) and a cold side configured to receive the flashed recirculation gas stream (36);
wherein the second heat exchanger (8) is configured to form
an outlet vapor stream (86) and an outlet liquid stream (82) from the hot side thereof; and
an outlet vapor stream (87) and at least one outlet liquid stream from the cold side thereof;
a flow line for feeding a recycle outlet liquid stream (83) from the cold side of the second heat exchanger (8) to the polymerization zone (2).

12. The system of claim 11, further comprising:
a flow line for withdrawing a portion (81), or the complete flow from the outlet vapor stream (86) from the hot side of the second heat exchanger (8); and/or
a flow line for withdrawing a portion (84) from the at least one outlet liquid stream from the cold side of the second heat exchanger (8).

13. The system of claim 11 or claim 12, wherein the polymerization zone (2) has a cascade configuration wherein a first reactor (21) and a second reactor (22) are placed in series.

14. The system of any one of claims 11-13, further comprising:
an expansion valve located between the first heat exchanger (5) and the phase separator (6), or comprised in the phase separator (6).

15. The system of any one of claims 11-14, comprising
a flow line for adding the outlet liquid stream (82) from the hot side of the second heat exchanger (8), or a portion thereof, to the phase separator (6) and/or to the liquified recirculation gas stream (34);
wherein the second heat exchanger (8) is located physically above the phase separation vessel (6), so that the outlet liquid stream (82) from the hot side thereof flows by gravity.
